# EUROPÄISCHE PATENTSCHRIFT

(11) **EP 3 533 758 B1**
(45) Veröffentlichungstag und Bekanntmachung des Hinweises auf die Patenterteilung: **25.11.2020**
(21) Anmeldenummer: 18159355.9
(22) Anmeldetag: 01.03.2018
(51) Int. Cl.: C01B 5/00, B01J 12/00, H01M 8/02, H01M 8/0236, H01M 8/0252

(54) **REKOMBINATOR**
RECOMBINER
RECOMBINATEUR

(43) Veröffentlichungstag der Anmeldung: 04.09.2019
(73) Patentinhaber: HOPPECKE Batterien GmbH & Co. KG., 59929 Brilon (DE)
(72) Erfinder: Strohmenger, Philipp, 59929 Hoppecke (DE); Pack, Hugo, 59929 Bontkirchen (DE); Rein, Alexander, 35394 Gießen Rödgen (DE)
(74) Vertreter: Rausch Wanischeck-Bergmann Brinkmann

(56) Entgegenhaltungen:
- EP-B1- 1 780 826
- GB-A- 1 405 980
- JP-A- H1 194 992

## Beschreibung

Die Erfindung betrifft einen Rekombinator zur katalytischen Rekombination von in Energiewandlern, insbesondere Akkumulatoren, entstehendem Wasserstoff und Sauerstoff zu Wasser, mit einer Rekombinationseinrichtung und einem einen Volumenraum bereitstellenden Gehäuse, dass die Rekombinationseinrichtung beherbergt. Rekombinatoren sowie Rekombinationseinrichtungen sind aus dem Stand der Technik an sich gut bekannt, so zum Beispiel aus der GB 1 405 980 A, JPH 11-94992 A, EP 1 807 191 B1, der EP 1 780 826 B1 und der EP 1 674 424 B1.

Ein Rekombinator der eingangs genannten Art verfügt über eine Rekombinationseinrichtung und ein Gehäuse. Im endmontierten Zustand ist die Rekombinationseinrichtung innerhalb des Gehäuses angeordnet, das heißt der vom Gehäuse bereitgestellte Volumenraum beherbergt die Rekombinationseinrichtung. Typischerweise ist das Gehäuse gasdicht ausgebildet, so dass nicht ungewollt in den Rekombinator einströmende Gase in die den Rekombinator umgebende Atmosphäre entweichen können.

Die im endmontierten Zustand vom Gehäuse eines Rekombinators aufgenommene Rekombinationseinrichtung verfügt im Kernstück über einen Katalysator. Als Katalysatoren sind vor allem Platinmetalle bekannt, insbesondere Palladium, das in Form einer dünnen Schicht auf einen Trägerstab, welcher zum Beispiel aus Kupfer, Tonerde oder dergleichen bestehen kann, aufgetragen ist. Der auf diese Weise ausgebildete Katalysatorstab ist in eine Röhre aus porösem Material, beispielsweise einem gasdurchlässigen Keramikrohr zentrisch eingesetzt, wobei der in der Röhre zwischen Katalysatorstab und Röhreninnenfläche verbleibende freie Ringraum mit einem Absorptionsmaterial befüllt ist. Als Absorptionsmaterial kommen insbesondere Bleioxyde, Silberoxyde, Eisenoxyde, Kupferoxyde, Aluminiumoxyde, Manganoxyde oder dergleichen in Betracht. Die den Katalysatorstab und das Absorptionsmaterial aufnehmende Röhre ist in aller Regel freistehend innerhalb des gasdicht ausgebildeten Gehäuses angeordnet, wobei das Gehäuse typischerweise über einen Anschlussstutzen zum Anschluss an einen Energiewandler, wie zum Beispiel einen Akkumulator aufweist, welcher Anschlussstutzen einer Gaszufuhr einerseits und einem Wasserablauf andererseits dient.

Die bei einem bestimmungsgemäß Betrieb beispielsweise eines mit einem Rekombinator ausgerüsteten Akkumulators, insbesondere während eines Ladevorgangs, entstehenden Gase Wasserstoff und Sauerstoff werden über den Anschlussstutzen des Rekombinators in das Gehäuse, das heißt in den vom Gehäuse bereitgestellten Volumenraum geführt, passieren dort die poröse Röhre und das Absorptionsmaterial und werden alsdann am Katalysator zu Wasser rekombiniert. Die Rekombinationsreaktion ist exotherm, weshalb das am Katalysator rekombinierte Wasser in Form von Wasserdampf vorliegt. Der am Katalysator entstehende Wasserdampf schlägt sich alsdann an der Gehäuseinnenwand nieder, kondensiert und fließt über den hierfür vorgesehenen Anschlussstutzen zurück in den Akkumulator.

Der mit der Verwendung eines Rekombinators der vorbeschriebenen Art einhergehende Vorteil liegt auf der Hand. Die bei einem Akkumulatorbetrieb freiwerdenden Gase Wasserstoff und Sauerstoff werden durch den Rekombinator zu Wasser rekombiniert, welches Wasser für den Akkumulator nicht verloren geht, sondern in den Elektrolyten des Akkumulators zurückgeführt wird. Es ist daher nicht erforderlich, destilliertes Wasser in den Elektrolyten des Akkumulators nachzufüllen. Insofern erweist sich ein je nach seiner Größe mit einem oder mehreren Rekombinatoren ausgerüsteter Akkumulator als wartungsfrei.

Dabei kann je nach Bauform und Baugröße des Akkumulators beziehungsweise in Abhängigkeit des zur Verfügung stehenden Platzangebots der Rekombinator entweder senkrecht oder längs zur Akkumulatoroberseite ausgerichtet ausgebildet sein.

Obgleich sich Rekombinatoren der vorbeschriebenen Bauart im alltäglichen Praxiseinsatz bewährt haben, besteht Verbesserungsbedarf. So hat sich gezeigt, dass es auch bei einem bestimmungsgemäßen Betrieb eines Akkumulators zur Entstehung einer solchen Menge an Wasserstoff und Sauerstoff kommen kann, dass es infolge der im Rekombinator stattfindenden Rekombination ob der Menge an zu rekombinierendem Gas zu einer Überhitzung der Rekombinationseinrichtung kommt. Im schlimmsten Fall kann eine solche Überhitzung zu einer Zerstörung der Rekombinationseinrichtung führen.

Aber auch dann, wenn die einzelnen Bestandteile der Rekombinationseinrichtung in Relation zueinander derart dimensioniert sind, dass ein Überlastschutz insofern gegeben ist, als das eine zu starke Rekombinationsleistung unterbunden ist, kann es bei zu viel in den vom Gehäuse bereitgestellten Volumenraum einströmendem Gas zu einer solchen Erhitzung der Rekombinationseinrichtung kommen, dass das den Katalysatorstab umgebende Absorptionsmaterial irreparabel geschädigt wird. Denn bei einer thermischen Belastung des Rekombinators ist insbesondere der Absorber, das heißt das den Katalysatorstab umgebende Absorptionsmaterial gefährdet, da dieses hydrophobe Eigenschaften hat, die infolge einer zu starken thermischen Belastung verlorengehen, womit der Absorber seine bestimmungsgemäße Eignung verliert, was je nach thermischer Schädigung die Rekombinationseinrichtung im schlimmsten Fall unbrauchbar macht.

Ein neuerer Vorschlag zur Lösung dieses Problems geht dahin, eine Trenneinrichtung vorzusehen, die den vom Gehäuse bereitgestellten Volumenraum in ein erstes Compartment und ein damit in strömungstechnischer Verbindung stehendes zweites Compartment unterteilt, wobei das erste Compartment die Rekombinationseinrichtung zumindest teilweise aufnimmt. Diese zusätzliche Einhausung der Rekombinationseinrichtung hat den Vorteil, dass innerhalb des vom Gehäuse bereitgestellten Volumenraums zwei strömungstechnisch miteinander gekoppelte Teilvolumina entstehen, wodurch im Betriebsfall ein dynamisches Gleichgewicht zwischen an der Rekombinationseinrichtung freiwerdendem Wasserdampf einerseits und in das Gehäuse einströmendem Gas andererseits ermöglicht ist. In der Praxis hat sich gezeigt, dass der Aufbau komplex und aufwändig ist.

Ausgehend vom Vorbeschriebenen ist es die **Aufgabe** der Erfindung, einen Rekombinator der eingangs genannten Art dahingehend weiterzubilden, dass eine zuverlässige Rekombinationsleistung auch bei größeren Mengen an zugeführtem Gas sichergestellt ist.

Zur **Lösung** dieser Aufgabe wird mit der Erfindung ein Rekombinator mit den Merkmalen des Patentanspruches 1 vorgeschlagen. Weitere Vorteile und Merkmale ergeben sich aus den Unteransprüchen.

Da gemäß dem Stand der Technik das Absorptionsmaterial den Katalysator direkt umgebend angeordnet ist, wirkt sich durch den exothermen Betrieb eine Erwärmung im Katalysatorbereich direkt auf das Absorbermaterial und damit auch auf dessen Effektivität aus. Durch die erfindungsgemäße Ausbildung des Rekombinators ist zwischen dem Bereich mit dem Absorptionsmaterial und den Bereich mit dem Katalysatormaterial ein Distanzraum ausgebildet. Mit der Erfindung wird mithin vorgeschlagen, den das Katalysatormaterial bereitstellenden Katalysator und den das Absorptionsmaterial bereitstellenden Absorber unter Belassung eines Distanzraums beabstandet zueinander anzuordnen. In Abkehr zum Stand der Technik ist also keine dichte Packung, das heißt direkte Nebeneinanderordnung von Katalysatormaterial einerseits und Absorptionsmaterial andererseits vorgesehen.

Dieser rein atmosphärisch gefüllte Distanzraum bewirkt eine Trennung zwischen der Katalysatoroberfläche und dem Absorbermaterial, so dass die Auswirkungen der Temperaturentwicklung auf das Absorbermaterial stark eingeschränkt sind. Durch diese beabstandete Anordnung wird erreicht, dass im bestimmungsgemäßen Rekombinationsfall ein zu hoher Hitzereintrag in das Absorber-, das heißt Absorptionsmaterial unterbleibt. Damit ist sichergestellt, dass das Absorptionsmaterial nicht infolge einer zu großen Hitzeeinwirkung in seinen Materialeigenschaften nachteilig beeinflusst wird und somit der Wirkungsgrad der Rekombination stark beeinträchtigt wird.

Das Katalysatormaterial ist als Katalysatorstab ausgebildet und im Wesentlichen zentrisch in einem gasdurchlässigen Rohr angeordnet. Dieses erste gasdurchlässige Rohr bietet einen im Wesentlichen zylindrischen Innenraum, völlig unabhängig von seinem sonstigen Querschnitt. Dieser Innenraum bildet, wenn der Katalysatorstab eingesetzt ist, einen hohlzylindrischen Spalt-, bzw. Ringraum, welcher nicht mit Absorptionsmaterial gefüllt ist. Der Querschnitt dieses Spaltraumes ist abhängig von dem Querschnitt des gasdurchlässigen Rohres, welches in vorteilhafter Weise aus einem porösen Keramikmaterial gebildet ist.

Der Spaltraum wird in der vorliegenden Erfindung als Distanzraum bezeichnet, weil er einen Abstand zwischen dem Katalysatormaterial einerseits und dem Absorptionsmaterial andererseits herstellt.

Die Kombination aus Katalysatorstab und erstem gasdurchlässigen Rohr mit dem dazwischen gebildeten Distanzraum bildet eine erste Baugruppe, die gemäß einem vorteilhaften Vorschlag der Erfindung von einem zweiten gasdurchlässigen Rohr umgeben ist, zumindest in dem Bereich, in dem sich der Katalysatorstab und das erste gasdurchlässige Rohr überdecken. Das zweite gasdurchlässige Rohr hat einen Innendurchmesser, der größer ist als der Außendurchmesser des ersten gasdurchlässigen Rohres, so dass sich hier wiederum ein Spalt-, bzw. Ringraum bildet. Dieser Spaltraum ist zur Aufnahme des Absorptionsmaterials vorgesehen.

An der oberen und unteren Öffnung des Spaltraumes im Bereich der Kanten des zweiten gasdurchlässigen Rohres ist eine Abdichtung des Spaltraumes vorgesehen, so dass dieser nicht zur Außenatmosphäre offen ist.

Das erste gasdurchlässige Rohr hat einen Innendurchmesser, der größer ist als der Außendurchmesser eines Katalysatorstabes. Dies definiert den Distanzraum, der nicht mit Absorptionsmaterial gefüllt ist.

Im Sinne der vorliegenden Erfindung bedeuten die Begriffe Rohr und Innendurchmesser nicht zwangsläufig, dass es sich um kreiseförmige oder zylindrische Geometrien handelt. Es können auch eckige Geometrien verwendet werden, sowohl für den Katalysatorstab als auch für die Rohre oder für einzelne Elemente der Gesamtbaugruppe.

Gemäß einer nicht erfindungsgemäßen Alternative kann der Katalysator auch als Schüttung ausgebildet sein ein. In diesem Fall ist die Verwendung eines stabförmigen Hülsenkörpers bevorzugt, der Katalysatormaterial in Form einer Schüttung beispielsweise aus einem Granulat oder dergleichen beherbergt. Gemäß dieser Ausführungsform ist der Katalysatorstab aus dem mit einer Schüttung befüllten Hülsenkörper gebildet. Dabei ist der Hülsenkörper durch ein erstes gasdurchlässiges Rohr gegeben, das das Katalysatormaterial in Form einer Schüttung aufnimmt. Der Hülsenkörper ist beidseitig durch Stopfen verschlossen, so dass die Katalysatormaterial-Schüttung lagesicher innerhalb des Hülsenkörpers positioniert ist.

Die das Katalysatormaterial bereitstellende Schüttung kann in ihrer Körnungsgröße je nach Anwendungsfall variieren, bis hin zu einem pulverförmigen Granulat. Dabei ist vorgesehen, dass die katalysatorisch wirkende Schüttung aus einem Granulat gebildet ist, das im Kern aus einem porösen Kugelmaterial besteht, das außenoberseitig beschichtet ausgebildet ist, und zwar mit einem katalysatorisch wirkenden Material, wie zum Beispiel Paladium. Gemäß einer Abwandlung kann vorgesehen sein, dass die Schüttung aus Katalysator-Granulat und einer Schüttung aus einem Füllmaterial versetzt ist. Danach ist die Katalysatorenschüttung aus zwei Granulatschüttungen zusammengesetzt, wobei nur eine der beiden katalysatorisch wirkt.

Die Ausbildung des Katalysators in Form einer Schüttung bewirkt, dass sich schüttungsbedingt zwischen den einzelnen Partikeln der Schüttung ein Schüttungszwischenraum einstellt, der in Summe als erfindungsgemäßer Distanzraum dient. Dabei ergibt sich die Größe des Distanzraums in Abhängigkeit der Korngröße der Schüttung. Denn je gröber die Schüttungsgröße ausfällt, desto größer stellt sich der Distanzraum ein beziehungsweise umgekehrt, je feiner die Schüttung ist, desto kleiner wird der Distanzraum.

Alternativ oder in Ergänzung hierzu kann vorgesehen sein, den in Form einer Schüttung vorliegenden Katalysator unter Belassung eines ringförmigen Spaltraums innerhalb des ersten gasdurchlässigen Rohres anzuordnen. In diesem Fall ist ein zum Katalysator gehörender hülsenförmiger Körper beispielsweise in Form eines gasdurchlässigen Rohrs vorgesehen, der die Katalysatorschüttung aufnimmt. Unter Belassung eines ringförmigen Spaltraums ist der Katalysator von einem ersten gasdurchlässigen Rohr umgeben. Dieses erste gasdurchlässige Rohr ist von einem zweiten gasdurchlässigen Rohr umgeben, wobei der Ringraum zwischen erstem und zweitem gasdurchlässigen Rohr mit Absorptionsmaterial aufgefüllt ist.

Gemäß dieser nicht erfindungsgemäßen Ausführungsform wird der erfindungsgemäße Distanzraum einerseits durch den Ringraum zwischen Katalysator und erstem gasdurchlässigen Rohr und andererseits durch den aufgrund der Schüttung zwischen den einzelnen Partikeln der Schüttung gegebenen Zwischenraum gebildet.

Erfindungsgemäß ist die Trennung der Oberfläche des Katalysatorstabs einerseits und dem Absorptionsmaterial andererseits durch die hülsenartige Ineinanderschachtelung der gasdurchlässigen Elemente, vorzugsweise Rohre aus poröser Keramik, wesentlich. Dies bewirkt, dass der exotherme Prozess an den Katalysatoroberflächen keine direkte Auswirkung auf das Absorptionsmaterial hat.

Gemäß einem weiteren vorteilhaften Vorschlag haben die gasdurchlässigen Rohre unterschiedliche Wandstärken. Diese können je nach Kapazität und Anfall zu kombinierender Gase dimensioniert und angepasst werden, wobei jedes der gasdurchlässigen Rohre gegenüber dem anderen mit einer größeren oder einer kleineren Wandstärke versehen sein kann.

Gemäß einem weiteren Merkmal der Erfindung ist vorgesehen, dass das Gehäuse einen Halter zur einseitigen Aufnahme der Rekombinationseinrichtung aufweist. Bei diesem Halter kann es sich bevorzugterweise um einen Rohrstutzen handeln, der die Rekombinationseinrichtung, die bevorzugterweise stabförmig ausgebildet ist, einendseitig aufnimmt. Dabei stützt sich der Halter seinerseits am Sockel des Gehäuses ab, womit eine insgesamt sichere Anordnung der Rekombinationseinrichtung gegeben ist.

Der die Rekombinationseinrichtung aufnehmende Rohrstutzen kann gemäß einem weiteren Merkmal der Erfindung einendseitig mit einer als Lochscheibe ausgebildeten Blende abschließen. Gemäß dieser Konstruktion durchragt die Rekombinationseinrichtung die Öffnung der als Blende dienenden Lochscheibe, wobei sich die Lochscheibe ihrerseits auf dem die Rekombinationseinrichtung aufnehmenden Rohrstutzen abstützt. Es ist so eine positionssichere Anordnung und Ausrichtung der einzelnen Baukomponenten des erfindungsgemäßen Rekombinators zueinander sichergestellt.

Weitere Merkmale und Vorteile der Erfindung ergeben sich aus der nachfolgenden Beschreibung der Figuren. Dabei zeigen:
- Fig. 1: in rein schematischer Darstellung einen Rekombinator der erfindungsgemäßen Art gemäß einer ersten Ausführungsform;
- Fig. 2: in rein schematischer Darstellung einen Rekombinator der erfindungsgemäßen Art gemäß einer zweiten Ausführungsform;
- Fig. 3: in geschnittener Perspektivansicht einen Rekombinator gemäß einer ersten nicht erfindungsgemäßen . Ausführungsform und
- Fig. 4: in geschnittener Perspektivansicht einen Rekombinator gemäß einer zweiten nicht erfindungsgemäßen Ausführungsform.

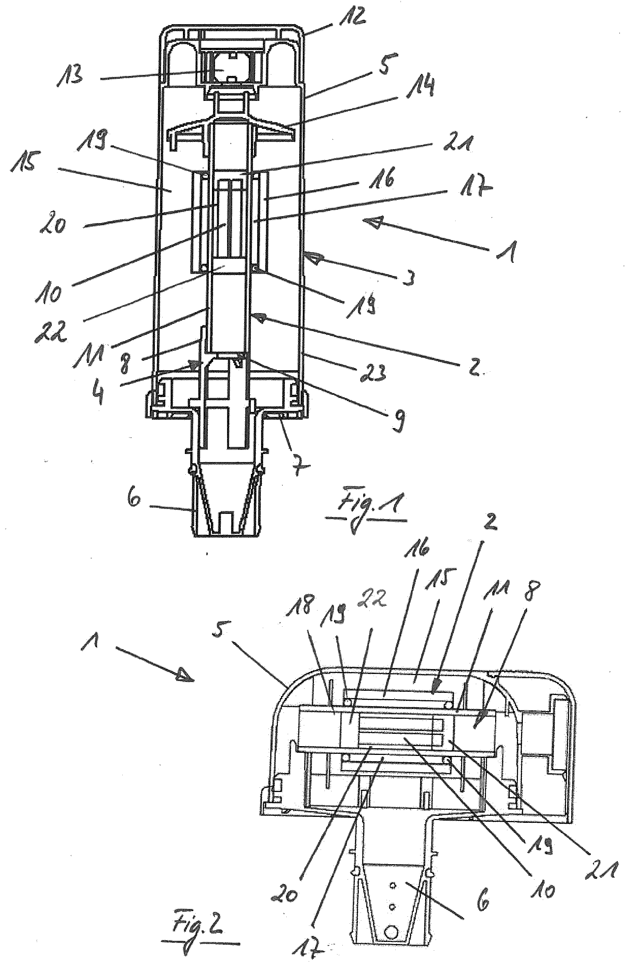

Fig. 1 zeigt in schematischer Darstellung einen Rekombinator 1 nach der Erfindung in sogenannter vertikaler Ausrichtung, das heißt mit stehend ausgebildeter Rekombinationseinrichtung 2.

Der Rekombinator 1 verfügt in an sich bekannter Weise über eine Rekombinationseinrichtung 2 und ein einen Volumenraum 15 bereitstellendes gasdichtes Gehäuse 3, das die Rekombinationseinrichtung 2 beherbergt.

Die Rekombinationseinrichtung 2 ist stabförmig ausgebildet und verfügt über einen Katalysatorstab 10, der innerhalb eines Keramikrohrs 11 angeordnet ist. Der Katalysatorstab 10 ist mit Bezug auf die Blattebene nach Figur 1 von einem oberen Halter 21 und einem unteren Halter 22 getragen, die sich ihrerseits innenseitig des Keramikrohrs 11 am Keramikrohr 11 abstützen. Der freie Spalt- oder Ringraum 20 zwischen dem Katalysatorstab 10 und der Innenoberfläche des Keramikrohrs 11 ist lediglich atmosphärengefüllt, beinhaltet mithin insbesondere keinerlei Absorptionsmaterial. Durch diese beanstandete Anordnung ist ein Distanzraum 20 geschaffen.

Das Gehäuse 3 weist einen Sockel 4 und eine daran angeordnete gasdichte Haube 5 auf. Im endmontierten Zustand ist die Haube 5 vom Sockel 4 getragen.

Der Sockel 4 stellt seinerseits einen Anschlussstutzen 6 sowie einen Aerosolabscheider 7 bereit. Dabei dient der Anschlussstutzen 6 einem strömungstechnischen Anschluss des Rekombinators 1 an einen nicht näher dargestellten Akkumulator. Im bestimmungsgemäßen Verwendungsfall kann zu rekombinierendes Gas über den Anschlussstutzen 6 aus dem Akkumulator in den Rekombinator 1 beziehungsweise infolge einer Rekombination entstandenes Wasser aus dem Rekombinator 1 in den Akkumulator überführt werden.

Der Sockel 4 trägt desweiteren einen Halter 8 in Form eines Rohrstutzens, der der einendseitigen Aufnahme der Rekombinationseinrichtung 2 dient.

Die Haube 5 ist im gezeigten Ausführungsbeispiel zweiteilig ausgebildet und verfügt über eine Haubenwand 23 einerseits und einen Haubendeckel 12 andererseits. Alternativ zu dieser Ausführungsform kann auch eine einstückige Ausgestaltung der Haube 5 vorgesehen sein.

Der Rekombinator 1 verfügt desweiteren über eine im gezeigten Ausführungsbeispiel zwischen Rekombinationseinrichtung 2 und Haubendeckel 12 ausgebildete Baugruppe 13, die in an sich bekannter Weise über einen Zündrückschlag beispielsweise in Form einer Fritte und eine Ventilanordnung verfügen kann, welche Ventilanordnung beispielsweise über ein Überdruckventil und/oder ein Unterdruckventil verfügen kann, so dass im Bedarfsfall ein Druckausgleich mit der den Rekombinator 1 umgebenden Atmosphäre stattfinden kann.

Im gezeigten Ausführungsbeispiel ist der Katalysatorstab 10 innerhalb eines ersten gasdurchlässigen Rohres 11 angeordnet. Zu diesem Zweck ist im gezeigten Ausführungsbeispiel das erste gasdurchlässige Rohr 11 im Halter 8 im Bereich des Sockels 4 eingesetzt.

Ein zweites gasdurchlässiges Rohr 16 wiederum ist die Baugruppe aus Katalysatorstab 10 und erstem gasdurchlässigen Rohr 11 aufnehmend um diese herum angeordnet. Gegenüber dem ersten gasdurchlässigen Rohr 11 sind Abdichtungen 19 ausgebildet, die zwischen dem ersten gasdurchlässigen Rohr 11 einerseits und dem zweiten gasdurchlässigen Rohr 16 andererseits angeordnet sind. Diese Abdichtungen 19 begrenzen zudem den zwischen den beiden Rohren ausgebildeten Spalt-, bzw. Ringraum 17. Dabei dient dieser Spaltraum 17 zur Ausbildung eines Absorbers der Aufnahme eines Absorptionsmaterials, auch in schüttfähiger Form, denn die Abdichtungen 19 dienen als Barriere einem Herausfallschutz.

In bekannter Weise ist der Haubendeckel 12 mit der an sich bekannten Baugruppe 13 versehen. Ein Kondensationsdach 14 ist oberhalb des Katalysatorstabes 10 angeordnet und im gezeigten Ausführungsbeispiel als obere Halterung für das erste gasdurchlässige Rohr 11 ausgebildet.

Das über den Anschlussstutzen 6 in den Volumenraum 15 strömende Gas passiert zunächst das zweite gasdurchlässige Rohr 16 um in dem Spaltraum 17 mit dem Absorptionsmittel in Kontakt zu kommen. Dann strömt das Gas weiter durch das erste gasdurchlässige Rohr zum Katalysatorstab 10. Der sich bildende Wasserdampf nimmt den umgekehrten Weg und schlägt sich kondensierend an der Haube 5 nieder. Dabei dient das Kondensationsdach 14 dazu, die Rekombinationseinrichtung 2, insbesondere den Katalysatorstab 10, vor einer ungewollten Durchnässung infolge von an dem Haubendeckel 12 kondensiertem und nach unten abtropfendem Wasser zu schützen. Das durch Rekombination entstandene Wasser verlässt schließlich über Aerosolabscheider 7 den Rekombinator 1.

Von erfindungswesentlicher Bedeutung ist der Distanzraum 20, mittels dem das den Absorber bildende Absorptionsmaterial unter Zwischenordnung des Keramikrohrs 11 vom Katalysatorstab 10 beabstandet ist. Durch diese Ausgestaltung wird eine thermische Entkopplung von Katalysatorstab 10 und Absorber sichergestellt, so dass eine zu starke Einwirkung von am Katalysatorstab 10 im Betriebsfall entstehender Hitze vermieden ist. Damit ergibt sich in vorteilhafter Weise höhere Langlebigkeit der Absorbers und damit auch der Rekombinationseinrichtung 2.

Fig. 2 zeigt eine alternative Ausführungsform der Erfindung, wobei diese Ausführungsform eine sogenannte liegende Anordnung, das heißt eine horizontal ausgerichtete Anordnung der Rekombinationseinrichtung 2 betrifft. Ansonsten entspricht der Aufbau und die Funktionsweise des in Fig. 2 gezeigten Rekombinators 1 derjenigen des Rekombinators 1 nach Fig. 1.

Hier sind der Katalysatorstab 10 sowie die beiden im Wesentlichen konzentrischen gasdurchlässigen Rohre 11 und 16 unter Belassung der Distanzräume 17 und 20 im Wesentlichen parallel zu der Oberfläche eines nicht gezeigten Akkumulators oder sonstigen Energiewandlers angeordnet. Eine Stützhülse 18 sorgt in diesem Fall dafür, dass die im Wesentlichen horizontale Anordnung in Position bleibt.

Im Falle des Ausführungsbeispiels gemäß Fig. 1 steht die Rekombinationseinrichtung 2 im Wesentlichen senkrecht zur Oberfläche eines Akkumulators, so dass hier entsprechende Verschiebungen nicht zu befürchten sind.

Zwecks horizontaler Ausrichtung der Rekombinationseinrichtung 2 ist der die Rekombinationseinrichtung 2 abstützende Halter 8 zweiteilig ausgebildet, wobei ein erster Teil einendseitig und ein anderer Teil anderendseitig der Rekombinationseinrichtung 2 zur Abstützung derselben vorgesehen ist.

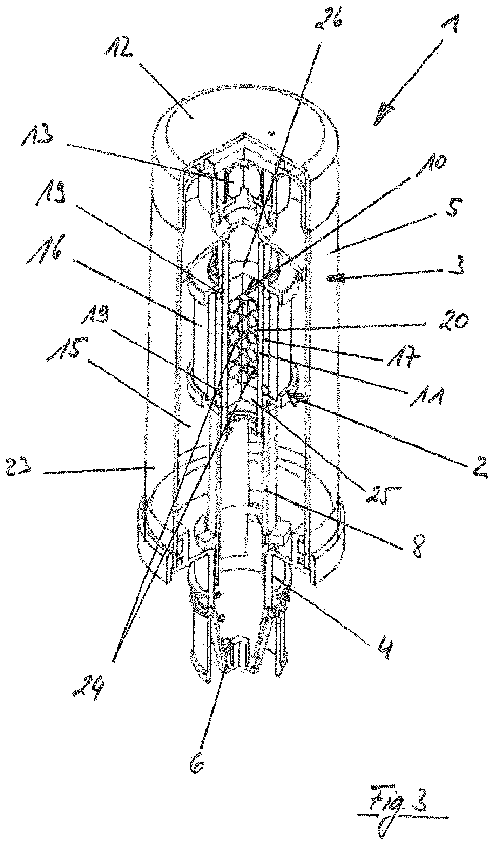

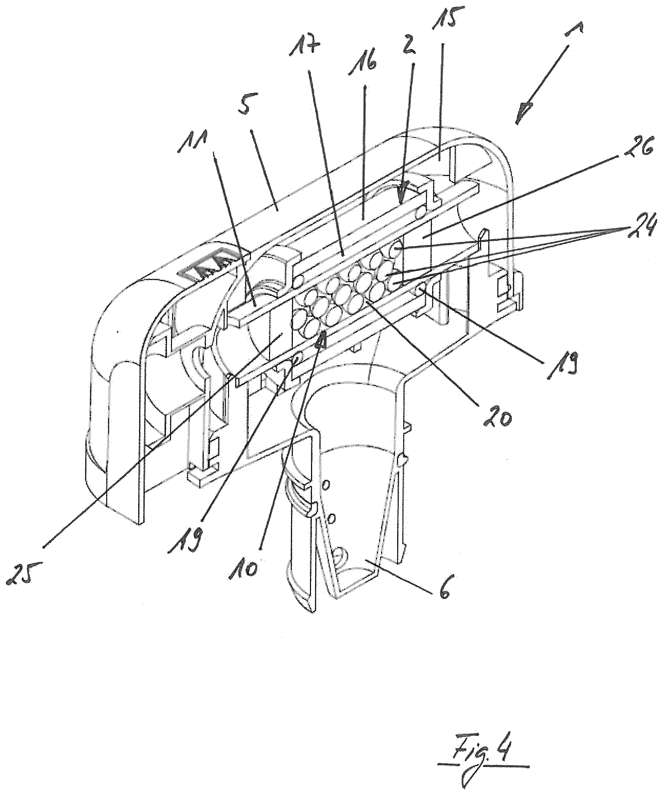

Die Figuren 3 und 4 zeigen jeweils eine nicht erfindungsgemäße Ausführungsform der Erfindung, wobei Fig. 3 eine sogenannte Vertikal-Ausrichtung und Fig. 4 eine sogenannte Horizontal-Ausrichtung zeigt.

Beiden Ausführungsformen gemäß Fig. 3 beziehungsweise gemäß Fig. 4 ist gemein, dass der Katalysator 10 als Schüttung ausgebildet ist. Dabei dient das gasdurchlässige Rohr 11 als Hülsenkörper zur Aufnahme der Katalysatorschüttung. Die Katalysatorschüttung ist im gezeigten Ausführungsbeispiel ein Granulat aus kugelförmig ausgebildeten Körnern 24, die von dem vom Rohr 11 umschlossenen Innenraum beherbergt sind. Zum endseitigen Verschluss des Rohres 11 dienen Stopfen 25 und 26, zwischen welchen beiden Stopfen 25 und 26 die Katalysatorschüttung lagesicher positioniert ist.

Die Granulatkörner 24 der Katalysatorschüttung liegen jeweils unter Ausbildung eines Zwischenraums aneinander, wobei dieser Zwischenraum in Summe den Distanzraum 20 bereitstellt. Alternativ oder in Ergänzung hierzu kann vorgesehen sein, dass die Schüttung unter Belassung eines Ringraums beabstandet zum gasdurchlässigen Rohr 11 angeordnet ist, in welchem Fall der Distanzraum 20 dann durch den zwischen den Granulatkörnern befindlichen Zwischenraum und den Ringraum gebildet ist.

### Bezugszeichen

- 1: Rekombinator
- 2: Rekombinationseinrichtung
- 3: Gehäuse
- 4: Sockel
- 5: Haube
- 6: Anschlussstutzen
- 7: Aerosolabscheider
- 8: Halter
- 9: Blende
- 10: Katalysator
- 11: erstes gasdurchlässiges Rohr (Keramikrohr)
- 12: Haubendeckel
- 13: Baugruppe
- 14: Kondensationsdach
- 15: Volumenraum
- 16: zweites gasdurchlässiges Rohr
- 17: Spaltraum
- 18: Stützhülse
- 19: Abdichtung
- 20: Distanzraum
- 21: Halter
- 22: Halter
- 23: Haubenwand
- 24: Korn
- 25: Stopfen
- 26: Stopfen

## Patentansprüche

1. Rekombinator (1) zur katalytischen Rekombination von in Energiewandlern, insbesondere Akkumulatoren, entstehendem Wasserstoff und Sauerstoff zu Wasser, mit einem Gehäuse (3), in welchem ein Volumenraum (15) ausgebildet ist, in den die Gase über eine Öffnung einströmen können und in welchem eine Rekombinationseinrichtung (2) angeordnet ist, die einen Bereich für ein Katalysatormaterial und einen Bereich für ein Absorptionsmaterial umfasst, wobei der Strömungsweg der zu rekombinierenden Gase durch den Bereich mit dem Absorptionsmaterial in den Bereich mit dem Katalysatormaterial führt, wobei zwischen dem Bereich mit dem Absorptionsmaterial und dem Bereich mit dem Katalysatormaterial ein Distanzraum (20) ausgebildet ist,
**dadurch gekennzeichnet,**
**dass** das Katalysatormaterial als Katalysatorstab (10) ausgebildet ist, dass der Katalysatorstab (10) in einem ersten gasdurchlässigen Rohr (11) angeordnet ist und dass in einem Spaltraum zwischen der Innenwandung des ersten gasdurchlässigen Rohres (11) und der Außenwand des Katalysatorstabes (10) der Distanzraum (20) ausgebildet ist.

2. Rekombinator (1) nach Anspruch 1, **dadurch gekennzeichnet, dass** die aus Katalysatorstab (10), Distanzraum (20) und erstem gasdurchlässigen Rohr (11) gebildete Baugruppe unter Belassung eines das Absorptionsmaterial aufnehmenden Spaltraumes (17) von einem weiteren, zweiten gasdurchlässigen Rohr (16) umgeben ist.

3. Rekombinator (1) nach Anspruch 2, **dadurch gekennzeichnet, dass** die gasdurchlässigen Rohre (11, 16) aus poröser Keramik gebildet sind.

4. Rekombinator (1) nach einem der vorhergehenden Ansprüche 2 oder 3, **dadurch gekennzeichnet, dass** der das Absorptionsmaterial aufnehmende Spaltraum (17) hohlzylindrisch ausgebildet und an den Stirnkanten abgedichtet ist.

5. Rekombinator (1) nach einem der vorhergehenden Ansprüche 2 bis 4, **dadurch gekennzeichnet, dass** das zweite gasdurchlässige Rohr (16) eine größere Wandstärke aufweist als das erste gasdurchlässige Rohr (11).

6. Rekombinator (1) nach einem der vorhergehenden Ansprüche, **gekennzeichnet durch** einen Halter (8) zur einendseitigen Aufnahme der Rekombinationseinrichtung (2) aufweist.

7. Rekombinator (1) nach Anspruch 6, **dadurch gekennzeichnet, dass** der Halter (8) ein Rohrstutzen ist.

## Claims

1. A recombiner (1) for the catalytic recombination of hydrogen and oxygen generated in energy converters, in particular accumulators, to form water, comprising a housing (3) in which a volume space (15) is formed, into which the gases can flow via an opening and in which a recombination device (2) is arranged that comprises a portion for a catalyst material and a portion for an absorption material, wherein the flow path of the gases to be recombined extends through the portion comprising the absorption material into the portion comprising the catalyst material, wherein a distance space (20) is formed between the portion comprising the absorption material and the portion comprising the catalyst material,
**characterized in**
**that** the catalyst material is configured as a catalyst bar (10), that the catalyst bar (10) is arranged in a first gas-permeable tube (11) and that the distance space (20) is formed in a gap space between the inner walling of the first gas-permeable tube (11) and the outer wall of the catalyst bar (10).

2. A recombiner (1) according to claim 1, **characterized in that** the module formed by the catalyst bar (10), the distance space (20) and the first gas-permeable tube (11) is surrounded by another second gas-permeable tube (16) while leaving a gap space (17) which receives the absorption material.

3. A recombiner (1) according to claim 2, **characterized in that** the gas-permeable tubes (11, 16) are made of porous ceramic.

4. A recombiner (1) according to one of the preceding claims 2 or 3, **characterized in that** the gap space (17) which receives the absorption material is configured to be hollow cylindrical and is sealed at the end edges.

5. A recombiner (1) according to one of the preceding claims 2 through 4, **characterized in that** the second gas-permeable tube (16) comprises a greater wall thickness than the one of the first gas-permeable tube (11).

6. A recombiner (1) according to one of the preceding claims, **characterized by** a holder (8) for receiving the recombination device (2) on the side of one end.

7. A recombiner (1) according to claim 6, **characterized in that** the holder (8) is a pipe socket.

## Revendications

1. Recombinateur (1) pour la recombinaison catalytique de l'hydrogène et de l'oxygène générés dans des convertisseurs d'énergie, notamment des accumulateurs, pour former de l'eau, comprenant un boîtier (3), dans lequel est formé un espace de volume (15), dans lequel les gaz peuvent entrer via une ouverture, et dans lequel un dispositif de recombinaison (2) est disposé, qui comprend une partie pour un matériau de catalyseur et une partie pour un matériau d'absorption, le trajet de courant des gaz à recombiner s'étendant à travers la partie comprenant le matériau d'absorption dans la partie comprenant le matériau de catalyseur, un espace de distance (20) étant formé entre la partie comprenant le matériau d'absorption et la partie comprenant le matériau de catalyseur,
**caractérisé en ce**
**que** le matériau de catalyseur est configuré comme une barre de catalyseur(10), que la barre de catalyseur (10) est disposée dans un premier tube perméable au gaz (11), et que l'espace de distance (20) est formé dans un espace de fente entre la paroi intérieure du premier tube perméable au gaz (11) et la paroi extérieure de la barre de catalyseur (10).

2. Recombinateur (1) selon la revendication 1, **caractérisé en ce que** le module composé de la barre de catalyseur (10), de l'espace de distance (20) et du premier tube perméable au gaz (11) est entouré par un autre deuxième tube perméable au gaz (16) en laissant un espace de fente (17), qui reçoit le matériau d'absorption.

3. Recombinateur (1) selon la revendication 2, **caractérisé en ce que** les tubes perméables au gaz (11, 16) sont fabriqués en céramique poreuse.

4. Recombinateur (1) selon l'une des revendications précédentes 2 ou 3, **caractérisé en ce que** l'espace de fente (17), qui reçoit le matériau d'absorption, est configuré sous forme d'un cylindre creux et est scellé aux bords frontaux.

5. Recombinateur (1) selon l'une des revendications précédentes 2 à 4, **caractérisé en ce que** le deuxième tube perméable au gaz (16) comprend une épaisseur de paroi plus élevée que celle du premier tube perméable au gaz (11).

6. Recombinateur (1) selon l'une des revendications précédentes, **caractérisé par** un support (8) pour recevoir le dispositif de recombinaison (2) sur le côté d'une extrémité.

7. Recombinateur (1) selon la revendication 6, **caractérisé en ce que** le support (8) est une tubulure.
